# EUROPÄISCHE PATENTSCHRIFT

(11) **EP 0 352 511 B1**
(45) Veröffentlichungstag und Bekanntmachung des Hinweises auf die Patenterteilung: **29.12.1993**
(21) Anmeldenummer: 89112259.0
(22) Anmeldetag: 05.07.1989
(51) Int. Cl.: C09K 5/00

(54) **Kälteträger**
Cooling mixture
Support de froid

(30) Priorität: 23.07.1988 DE 3825096
(43) Veröffentlichungstag der Anmeldung: 31.01.1990
(73) Patentinhaber: Linde Aktiengesellschaft, 65189 Wiesbaden (DE)
(72) Erfinder: Mall, Klaus, D-5047 Wesseling (DE); Gruber, Franz, D-5040 Brühl (DE)
(74) Vertreter: Schaefer, Gerhard, Dr.

(56) Entgegenhaltungen:
- FR-A- 2 373 597
- GB-A- 738 339
- US-A- 2 444 555
- US-A- 2 468 869
- DERWENT FILE SUPPLIER JAPS (JAPANESE PATENT OFFICE), Derwent Publications London, GB

## Beschreibung

Kälteträger werden z.B. in Kühlkreisläufen von Kühlanlagen, Klimaanlagen etc. verwendet. Kälteanlagen, die bei Temperaturen von unter -30°C arbeiten, stellen besonders hohe Anforderungen an den Kälteträger. Herkömmliche Kälteträger sind diesen Anforderungen nicht immer gewachsen. Andererseits haben bekannte Kälteträger für Temperaturen unter -30°C, die als Kühlsolen zur Kühlung von Kühlmöbeln oder Kühlräumen in Supermärkten geeignet sind, erhebliche Nachteile: Kalziumchlorid/Wasser-Mischungen sind wegen ihres bekannten korrosiven Verhaltens gegenüber metallischen Werkstoffen in den üblichen Kälteanlagen nicht einsetzbar, da deren Wärmeaustauscher in der Regel aus Kupfer bestehen. Alkohol/Wasser-Mischungen, die für Temperaturen unter -30°C einsetzbar sind, haben entweder einen Flammpunkt, der unter 55°C liegt, was aufwendige Schutzmaßnahmen zur Folge hätte, oder ihre kinematische Viskosität ist zu groß. Um einigermaßen brauchbare Wärmeübergangskoeffizienten zu erhalten, muß nämlich die kinematische Viskosität von Kälteträgern bei -40°C kleiner als 6 mm²/s sein. Soll ein Kälteträger z.B. in Lebensmittelmärkten eingesetzt werden, so muß er darüber hinaus toxisch und ökologisch unbedenklich sein.

Es ist im Prinzip bekannt, daß sich auch Silikone (Polyorganosiloxane) als Wärmeübertragungsmittel eignen. Eine Verwendung dieser Silikone als Kälteträger für Kälteanlagen, die bei Temperaturen unter -30°C arbeiten, hat sich bisher in der Praxis jedoch nicht durchgesetzt. Einerseits weisen die meisten Silikone bei so tiefen Temperaturen eine zu hohe kinematische Viskosität auf, andererseits liegt bei Silikonen, die zwar die geeignete Viskosität zeigen, der Flammpunkt zu niedrig, was aufwendige Schutzmaßnahmen erfordern würde.

Aus der JP-A- 59 058 081 ist eine Kühlflüssigkeit für Hochspannungsschaltgeräte, wie Transistoren, Thrysistoren und Transformatoren bekannt. Um einen Siedepunkt von über 110°C zu erreichen, wird vorgeschlagen, Kohlenwasserstoffe u.a. mit einem Silikon-Öl zu mischen. Da die Kühlflüssigkeit bei Betriebstemperaturen eingesetzt wird, die deutlich über der Umgebungstemperatur liegt, ist die Viskosität der Kühlflüssigkeit bei tiefen Temperaturen nicht von Bedeutung.

Der vorliegenden Erfindung liegt die Aufgabe zugrunde, einen Kälteträger zur Verfügung zu stellen, der sich für den Einsatz bei Temperaturen unter -30°C eignet und nicht korrosiv sowie toxisch und ökologisch unbedenklich ist.

Diese Aufgabe wird erfindungsgemäß durch einen Kälteträger gelöst, der durch Mischen von Polyorganosiloxanen und Entzug leichtsiedender Bestandteile des Gemisches aus niedrigviskosen Silikonen hergestellt ist, so daß das Gemisch bei einer Temperatur von -40°C eine kinematisch Viskosität von weniger als 6 mm²/s aufweist und sein Flammpunkt bei einer Temperatur von über 55°C liegt.

Dieser erfindungsgemäße Kälteträger eignet sich vorzüglich für Temperaturen von unter -30°C, da er auch bei niedrigen Temperaturen eine genügend geringe kinematische Viskosität aufweist. Andererseits liegt sein Flammpunkt hoch genug, um nicht aufwendige Schutzmaßnahmen zu erfordern. Insbesondere ist er für den Einsatz in Kälteanlagen zur Kühlung von Kühlmöbeln oder Kühlräumen in Supermärkten geeignet, da er weder giftig noch umweltschädlich ist.

Die Erfindung stellt somit einen neuen Kälteträger auf der Basis von Silikonen zur Verfügung, der bislang für Silikone unbekannte Eigenschaften aufweist.

In einer bevorzugten Ausführungsform der Erfindung handelt es sich bei den Polyorganosiloxanen um Polydimethylsiloxane. Der so beschaffene Kälteträger ist eine wasserhelle, klare Flüssigkeit.

Der Erfindung liegt die Erkenntnis zugrunde, daß durch Entfernen der leichtersiedenden Bestandteile aus niedrigviskosen Silikonen bei gleichbleibendem Molekülaufbau der Flammpunkt auf über 55°C heraufgesetzt werden kann.

Um auch kleinste Undichtigkeiten in Rohrleitungen, Armaturen oder Apparaten zu erkennen, wird ferner vorgeschlagen, daß der Kälteträger einen Farbstoff enthält. Durch Zugabe einer Menge von weniger als 0,05 Massen% Thymolblau wird beispielsweise das wasserklare Gemisch aus Polydimethylsiloxanen tiefblau eingefärbt, so daß auch kleinste Verluste identifizierbar sind. Aufgrund der niedrigen Oberflächenspannung des erfindungsgemäßen Kälteträgers (ca. 19 mN . m⁻¹) ist dieser in der Lage, in kleinste Poren und Kapillaren einzudringen und beim Verlassen derselben großflächig zu zerfließen, was ein Auffinden von Undichtkeiten weiter erleichtert.

In einer Weiterbildung des Erfindungsgedankens enthält der Kälteträger zusätzlich einen hydrophilen Stoff. Silikone und manche Farbstoffe sind nämlich nicht in Wasser löslich, so daß es sich empfiehlt, beim Einfärben des Gemisches einen hydrophilen Stoff als Lösungsvermittler zuzugeben. Bevorzugterweise wird Isopropanol in einer Menge von weniger als 5 Massen%, vorzugsweise weniger als 2 Massen%, als Lösungsvermittler zugesetzt. Dies erleichtert eine Ausbreitung des Farbstoffs auf feuchten und/oder eishaltigen Oberflächen. Die meisten Farbstoffe sind nämlich in Isopropanol voll löslich, während das Isopropanol wiederum vollständig mit Wasser mischbar ist und Eiskristalle an- bzw. auflöst.

## Patentansprüche

1. Kälteträger, hergestellt durch Mischen von Polyorganosiloxanen und Entzug leicht siedender Bestandteile des Gemisches aus niedrigviskosen Silikonen, so daß das Gemisch bei einer Temperatur von -40°C eine kinematische Viskosität von weniger als 6 mm²/s aufweist und sein Flammpunkt bei einer Temperatur von über 55°C liegt.

2. Kälteträger nach Anspruch 1, dadurch gekennzeichnet, daß es sich bei den Polyorganosiloxanen um Polydimethylsiloxane handelt.

3. Kälteträger nach Anspruch 1 oder 2, dadurch gekennzeichnet, daß er einen Farbstoff enthält.

4. Kälteträger nach einem der Ansprüche 1 bis 3, dadurch gekennzeichnet, daß er zusätzlich einen hydrophilen Stoff als Lösungsvermittler enthält.

## Claims

1. A cooling medium, produced by mixing polyorganosiloxanes and extracting low boiling constituents of the mixture of low-viscosity silicones, so that at a temperature of -40°C the mixture possesses a kinematic viscosity of less than 6 mml/s and its flash point occurs at a temperature greater than 55°C.

2. A cooling medium as claimed in Claim 1, characterised in that the polyorganosiloxanes are polydimethylsiloxanes.

3. A cooling medium as claimed in Claim 1 or 2, characterised in that it contains a dye.

4. A cooling medium as claimed in one of Claims 1 to 3, characterised in that it additionally contains a hydrophilic substance as solubilizer.

## Revendications

1. Réfrigérant obtenu par mélange de polyorganosiloxanes et extraction des composants à bas point d'ébullition du mélange de silicones faiblement visqueux, de sorte que le mélange présente, à une température de -40°C, une viscosité cinématique inférieure à 6mm²/s et que son point d'éclair se situe à une température supérieure à 55°C.

2. Réfrigérant selon la revendication 1, caractérisé en ce que les polyorganosiloxanes consistent en polydiméthylsiloxanes.

3. Réfrigérant selon la revendication 1 ou 2, caractérisé en ce qu'il contient une matière colorante.

4. Réfrigérant selon l'une des revendications 1 à 3, caractérisé en ce qu'il contient en outre, une substance hydrophile comme agent de solubilisation.
